# EUROPÄISCHE PATENTSCHRIFT

(11) **EP 2 316 260 B1**
(45) Veröffentlichungstag und Bekanntmachung des Hinweises auf die Patenterteilung: **09.09.2015**
(21) Anmeldenummer: 11151636.5
(22) Anmeldetag: 08.11.2007
(51) Int. Cl.: A01D 75/18, A01G 3/053, H02P 6/06, A01D 69/02, H02P 29/02, H02H 7/085, H02P 1/18, H02P 6/18

(54) **Antriebsanordnung für ein portables Arbeitsgerät mit Strombegrenzung bei niedrigen Drehzahlen und erhöhtem Losbrechmoment zum Anfahren**
Power assembly for portable equipment with current limitation at low speed and increased breakaway current at starting
Agencement d'entraînement pour un appareil de travail portable avec limitation de courant en basse vitesse et courant de déblocage élevé pour le démarrage

(30) Priorität: 22.12.2006 DE 102006062354
(43) Veröffentlichungstag der Anmeldung: 04.05.2011
(62) Teilanmeldung aus: 07021717.9
(73) Patentinhaber: Andreas Stihl AG & Co. KG, 71336 Waiblingen (DE)
(72) Erfinder: Rosskamp, Dr., Heiko, 73099 Adelberg (DE)
(74) Vertreter: Witte, Weller & Partner Patentanwälte mbB

(56) Entgegenhaltungen:
- EP-A- 1 139 554
- WO-A-2005/053915
- DE-A1- 10 049 755
- US-A- 4 814 675
- US-A- 5 388 176
- US-A1- 2003 222 607
- US-A1- 2004 179 829

## Beschreibung

Die vorliegende Erfindung betrifft eine Antriebsanordnung für ein mobiles, insbesondere handgeführtes oder portables Arbeitsgerät für den Landschafts-, Forst- und Gartenbau, mit einem Elektromotor, einem Speicher für elektrische Energie, und einer Steuervorrichtung für den aus dem Energiespeicher gespeisten Elektromotor, wobei der Elektromotor eine bestimmte, insbesondere lineare Kennlinie zwischen dem von dem Elektromotor aufgenommenen elektrischen Strom und der Drehzahl einer Abtriebswelle des Elektromotors besitzt, wobei die Steuervorrichtung Strombegrenzungsmittel aufweist, die den durch den Elektromotor fließenden Strom auf einen Maximalwert begrenzen, um den Elektromotor vor einer Überlastung zu schützen.

Die vorliegende Erfindung betrifft ferner ein entsprechendes Verfahren zum Steuern eines Elektromotors sowie ein handgeführtes Arbeitsgerät für den Landschafts-, Forst-und Gartenbau mit einer solchen Antriebsanordnung.

Auf nahezu allen Gebieten der Elektrotechnik ist es bekannt, Mittel zur Strombegrenzung dazu zu verwenden, stromführende Bauteile vor einer Überlastung zu schützen. Diese Strombegrenzungsmittel kommen erst dann zur Wirkung, wenn der Strom bestimmte, vorab festgelegte Grenzen überschreitet (bspw. aufgrund des Versagens von anderen Bauteilen, aufgrund von Fehlbedienungen, etc.). Der Strom wird also mit anderen Worten in der Regel unabhängig von der angelegten Spannung und/oder unabhängig von dem jeweiligen elektrischen Widerstand auf einen Maximalwert begrenzt.

Aus dem Dokument DE 34 22 485 A1 ist es bekannt, eine temperaturkompensierte Strombegrenzung bei einem Elektromotor anzuwenden, der zum Antrieb von Handwerkzeugen und dergleichen bestimmt ist. Hier wird vorgeschlagen, mittels eines Strom-Reihenshunts den elektrischen Strom zu messen, der durch den Motor fließt. Zum anderen wird über einen NTC-Widerstand die Temperatur des Reihenshunts gemessen. Aus der Temperatur des Reihenshunts wird die Temperatur des Elektromotors indirekt erfasst. Bei Erreichen einer kritischen Motortemperatur wird die Stromzufuhr kontinuierlich, aber für den Benutzer fühlbar, zurückgenommen. In Reaktion darauf stellt der Benutzer das Werkzeug lastfrei, so dass sich der Elektromotor schnell wieder abkühlen kann.

Auf dem Gebiet der Arbeitsgeräte für den Landschafts-, Forst- und Gartenbau sind zum einen solche Geräte bekannt, die von einem Verbrennungsmotor angetrieben werden. Diese Geräte werden häufig im professionellen Bereich eingesetzt. Ferner sind solche Arbeitsgeräte bekannt, die elektrisch angetrieben werden. Hierbei ist es insbesondere auf dem Gebiet der privaten Anwendungen bekannt, den Elektromotor aus dem Netz zu speisen. Dies bedingt eine Verbindung eines ortsfesten Netzsteckers mit dem Arbeitsgerät über ein Kabel. Derartige Geräte sind für den professionellen Bereich in der Regel nicht verwendbar, da ein Netzstecker nicht in angemessener Entfernung zur Verfügung steht. Bei den elektrisch angetriebenen Arbeitsgeräten sind, ebenfalls im Bereich der privaten Anwendung sowie im Profibereich, auch solche Arbeitsgeräte bekannt, die aus einem elektrischen Energiespeicher (z.B. NiCd-Akkumulator) gespeist werden. Seit einigen Jahren sind jedoch auch Akkumulatoren auf Lithiumbasis in Anwendung. Derartige Akkumulatoren sind generell auch für professionelle Arbeitsgeräte geeignet, siehe WO2005/053915. In diesem Dokument wird vorgeschlagen, einen Strombegrenzer zum Schutz einer Batterie auf Lithiumbasis zu verwenden.

Das Dokument US-A-4,814,675 beschreibt eine Antriebsordnung mit einem Elektromotor und einer Steuervorrichtung, wobei der Elektromotor eine lineare Strom-Drehzahl-Kennlinie besitzt und die Steuervorrichtung Strombegrenzungsmittel aufweist, die dazu dienen, Schalter einer Leistungselektronik zu schützen. Die Strombegrenzungsmittel begrenzen die Stromaufnahme des Elektromotors in einem Bereich niedriger Drehzahlen in Abhängigkeit von der Drehzahl auf Werte, die deutlich kleiner sind als die Kennlinienwerte, die sich für diese Drehzahlen aus der Kennlinie des Elektromotors ergeben.

Das Dokument DE 100 49 755 A1 betrifft eine Schutzschaltung für einen Gleichstrommotor, mit einer Freilaufdiode und einem Messwiderstand zur Begrenzung des Stromes in der Anlaufphase. Ein Leistungsschalter wird ständig angesteuert, sofern der benötigte Motorstrom geringer ist als der hinsichtlich des Dauermagnetfeldes zulässige Motorstrom. Erreicht der Motorstrom seinen zulässigen oberen Grenzwert, wird die Steuerspannung des Leistungshalbleiters abgeschaltet. Ein erneutes Zuschalten kann erst erfolgen, nachdem ein Unterschreiten einer unteren Stromgrenze aufgetreten ist, und führt zu einer Erhöhung der Drehzahl, wobei ein relativ hoher Strom bis zur oberen Stromgrenze aufgenommen wird. Die Realisierung der unteren Stromgrenze und damit des unteren Schwellenwertes erfolgt über einen Hysteresebetrieb eines Komparators.

Vor dem obigen Hintergrund ist es die Aufgabe der Erfindung, eine verbesserte Antriebsanordnung für ein handgeführtes Arbeitsgerät, ein verbessertes Verfahren zum Steuern eines Elektromotors für eine solche Antriebsanordnung und ein verbessertes handgeführtes Arbeitsgerät für den Landschafts-, Forst- und Gartenbau anzugeben.

Diese Aufgabe wird durch eine Antriebsanordnung gemäß Anspruch 1 gelöst, wobei die Steuervorrichtung die Stromaufnahme des Elektromotors in einem Bereich niedriger Drehzahlen generell auf Wert begrenzt, die deutlich kleiner sind als die Kennlinienwerte, die sich für diese Drehzahlen aus der Kennlinie des Elektromotors ergeben.

Elektromotoren haben generell eine Kennlinie, die bei niedrigen Drehzahlen eine hohe Stromaufnahme und bei hohen Drehzahlen eine niedrige Stromaufnahme zeigt. Eine hohe Stromaufnahme bedeutet dabei in der Regel auch ein hohes, von dem Elektromotor abgegebenes Drehmoment

Verbrennungsmotoren haben demgegenüber eine Kennlinie, die bei niedrigen Drehzahlen ein relativ geringes Drehmoment bereitstellt, in einem mittleren Drehzahlbereich ein relativ hohes Drehmoment, und in einem Bereich hoher Drehzahlen wieder ein relativ geringes Drehmoment.

Generell ist die Charakteristik von Elektromotoren, in Bereichen niedriger Drehzahlen hohe Momente zur Verfügung zu stellen, durchaus erwünscht.

Mit der vorliegenden Erfindung wird jedoch vorgeschlagen, gerade im Bereich niedriger Drehzahlen die Stromaufnahme generell, d.h. unabhängig von anderen Parametern zu begrenzen. Mit anderen Worten prägt die Steuervorrichtung dem Elektromotor eine neue Kennlinie auf, die im Bereich niedriger Drehzahlen eine geringere Stromaufnahme bedingt.

Dies hat zur Folge, dass das von dem Arbeitsgerät im Bereich niedriger Drehzahlen zur Verfügung gestellte Drehmoment generell kleiner ist als es durch den verwendeten Elektromotor möglich wäre. Obgleich dies auf den ersten Blick nachteilig erscheint, ist hiermit eine Reihe von Vorteilen verbunden.

Bei Arbeitsgeräten für den Landschafts-, Forst- und Gartenbau werden die Arbeitsgeräte häufig auf eine Nenndrehzahl angesteuert. Andererseits verändert sich die Last für den Elektromotor ständig, und zwar beispielsweise aufgrund veränderten Verhaltens des Benutzers, aufgrund veränderter Verhältnisse (beispielsweise dicke Äste/dünne Äste, etc.).

Wird die Last stark erhöht, verringert sich die Drehzahl des Motors. Dies führt zu einem relativ starken Stromanstieg und damit zu einem relativ hohen Stromverbrauch. Dies verringert die Einsatzzeit des portablen Energiespeichers. Ferner verringert sich der Wirkungsgrad des Motors.

Durch die "aktive" Strombegrenzung im Bereich niedriger Drehzahlen wird folglich erreicht, dass der Stromverbrauch in solchen Situationen verringert wird. Dies verlängert die Einsatzzeit des Energiespeichers. Ferner erhält der Benutzer ein besseres "Feedback", wenn er eine zu große Kraft auf das Arbeitsgerät ausübt. Bei herkömmlichen Antriebsanordnungen mit Elektromotor zeigt sich dies für den Benutzer weniger stark, da der Elektromotor im Bereich niedriger Drehzahlen dann ein höheres Drehmoment bereitstellt. Dagegen erhält der Benutzer eines Arbeitsgerätes mit einer Antriebsanordnung der vorliegenden Erfindung eine bessere Reaktion auf sein Verhalten.

Insgesamt kann hierdurch auch verhindert werden, dass der Elektromotor zu schnell überhitzt. Die generelle Begrenzung der Stromaufnahme kann eine herkömmliche Strombegrenzung auf einen Maximalstrom ersetzen. Es versteht sich jedoch, dass auch eine zusätzliche Strombegrenzungseinrichtung zum Verhindern einer Überlastung des Elektromotors vorhanden sein kann, beispielsweise eine Schmelzsicherung oder Ähnliches. Der Maximalstrom einer solchen zusätzlichen Strombegrenzungseinrichtung ist jedoch in der Regel höher als der von den erfindungsgemäßen generellen Strombegrenzungsmitteln zugelassene Maximalstrom.

Die Begrenzung der Stromaufnahme in dem Bereich niedriger Drehzahlen erfolgt dabei erfindungsgemäß in Abhängigkeit von der Drehzahl. Mit anderen Worten wird die Stromaufnahme innerhalb dieses Bereiches niedriger Drehzahlen nicht auf einen einzelnen fixen Stromwert begrenzt. Vielmehr kann die Strombegrenzung innerhalb dieses Bereiches bei unterschiedlichen Drehzahlen unterschiedlich stark ausgeprägt sein. Die hierdurch erzeugte Steuerkennlinie kann folglich in dem Bereich niedriger Drehzahlen eine Steigung ungleich Null besitzen, oder eine Mehrzahl von Abschnitten mit unterschiedlichen Steigungen. Auch nicht lineare Steuerkennlinienabschnitte in diesem Bereich sind realisierbar.

Ferner ermöglicht die Erfindung, die Leistungscharakteristik des Arbeitsgerätes anwendungsoptimal einzustellen.

Die obige Aufgabe wird ferner durch ein Verfahren zum Steuern eines Elektromotors gemäß Anspruch 8 sowie durch ein handgeführtes Arbeitsgerät gemäß Anspruch 15 gelöst.

Wie erwähnt, erfolgt die Begrenzung der Stromaufnahme in dem Bereich niedriger Drehzahl generell, also im Wesentlichen unabhängig von weiteren Betriebsparametem der Antriebsanordnung.

Insbesondere soll die generelle Begrenzung der Stromaufnahme unabhängig von der Temperatur des Elektromotors erfolgen.

Gemäß einer weiteren bevorzugten Ausführungsform unterteilt die Steuervorrichtung den von der Kennlinie des Elektromotors vorgegebenen Drehzahlbereich in eine Mehrzahl von wenigstens drei Drehzahlbereichen, wobei zumindest in einem mittleren Drehzahlbereich ein Steuerkennlinienabschnitt mit einer geringeren Steigung als die Kennlinie des Elektromotors eingerichtet ist.

Bei dieser Ausführungsform wird eine "aktive" Strombegrenzung bereits in einem mittleren Drehzahlbereich eingerichtet.

Hierdurch lässt sich die Steuerkennlinie der Steuervorrichtung in dem mittleren Bereich beispielsweise qualiativ und/oder quantitativ an die Kennlinie eines Verbrennungsmotors anpassen. Dies ermöglicht einen Betrieb eines bestimmten Typs von Arbeitsgerät, unabhängig davon, ob das Gerät durch eine erfindungsgemäße Antriebsanordnung angetrieben wird oder durch eine Antriebsanordnung mit Verbrennungsmotor. Der Benutzer muss sich daher nicht auf unterschiedliche Arbeitsweisen einstellen.

Hierbei ist von besonderem Vorteil, wenn in einem unteren Drehzahlbereich ein Steuerkennlinienabschnitt mit einer Steigung eingerichtet ist, die kleiner ist als die Steigung des Steuerkennlinienabschnittes in dem mittleren Drehzahlbereich.

Dies ermöglich eine relativ gesehen stärkere aktive Strombegrenzung bei niedrigen Drehzahlen als bei mittleren Drehzahlen.

Femer kann erreicht werden, dass die Strombegrenzung sich von Steuerkennlinienabschnitt zu Steuerkennlinienabschnitt annähernd kontinuierlich ändern lässt. Es kann ein stetiger Steuerkennlinienverlauf eingerichtet werden, so dass ein ruckfreier Betrieb des Arbeitsgerätes möglich ist.

Gemäß einer besonders bevorzugten Ausführungsform ist die Steigung des Steuerkennlinienabschnittes in dem unteren Drehzahlbereich null.

Auf diese Weise kann für den Bereich sehr niedriger Drehzahlen der Strom relativ stark begrenzt werden, um so einer Überlastung des Motors bzw. einer zu starken Leistungsentnahme aus dem portablen Energiespeicher entgegenzuwirken.

Die Steuerkennlinienabschnitte können generell jede beliebige Form besitzen, sind jedoch jeweils vorzugsweise linear ausgebildet Generell haben die Steuerkennlinienbereiche bevorzugt eine positive Steigung oder eine Steigung von null. Im Bereich sehr niedriger Drehzahlen ist es jedoch generell auch denkbar, einen Steuerkennlinienabschnitt mit negativer Steigung einzurichten.

Insgesamt ist es ferner bevorzugt, wenn in einem oberen Drehzahlbereich im Wesentlichen keine Begrenzung der Stromaufnahme erfolgt.

Da das in diesem Bereich zur Verfügung gestellte Drehmoment aufgrund der niedrigen Ströme ohnehin relativ gering wird, und zwar aufgrund der Kennlinie des Elektromotors, wird in diesem Bereich vorzugsweise keine Begrenzung der Stromaufnahme durchgeführt.

Insgesamt ist es ferner bevorzugt, wenn die Steuervorrichtung die Stromaufnahme des Elektromotors zumindest in dem Bereich niedriger Drehzahlen generell auf Werte begrenzt, die wenigstens 20% kleiner sind als die Kennlinienwerte, die sich für diese Drehzahlen aus der Kennlinie des Elektromotors ergeben.

Hierdurch wird eine wirksame Energieeinsparung in diesem Drehzahlbereich realisiert.

Vorzugsweise wird die Steuerkennlinie insgesamt an den jeweiligen Anwendungsfall des Arbeitsgerätes angepasst, so dass sich bei gleichem Elektromotor und unterschiedlichen Arbeitsgeräten unterschiedliche Steuerkennlinien ergeben können.

Ferner ist es bevorzugt, wenn der Strom aufgrund einer Spannungsregelung begrenzt wird. Die Führungsgröße kann dabei entweder eine gemessene Drehzahl sein oder ein Kennfeld, das für jeden Elektromotor charakteristisch ist.

Bei dem erfindungsgemäßen Verfahren ist es bevorzugt, wenn die Strombegrenzung wirkungsgradoptimal erfolgt. Dies bedeutet mit anderen Worten, dass durch die Art der Strombegrenzung der Gesamtwirkungsgrad des handgeführten Arbeitsgerätes verbessert ist, so dass insgesamt eine längere Betriebsdauer mit einer vorgegebenen Akkumulatorladung erzielbar ist.

Ferner kann der Benutzer über die Strombegrenzung und den Drehmomentverlauf so "geführt" werden, dass er das Gerät mit oder nahe dem optimalen Wirkungsgrad betreibt.

Gemäß einer weiteren bevorzugten Ausführungsform beinhaltet die durch die Strombegrenzung erzeugte Steuerkennlinie im Bereich der Strombegrenzung einen Hystereseabschnitt.

Mit anderen Worten erfolgt die Begrenzung des Stroms innerhalb des Hystereseabschnittes unterschiedlich in Abhängigkeit davon, ob die Drehzahl erhöht wird oder verringert wird.

Besonders vorteilhaft ist es dabei, wenn der Hystereseabschnitt so ausgestaltet ist, dass beim Erhöhen der Drehzahl ein relativ hoher Strom aufgenommen wird und dass beim Verringern der Drehzahl ein relativ niedrigerer Strom aufgenommen wird.

Mit anderen Worten kann hierdurch erreicht werden, dass beim Verringern der Drehzahl (beispielsweise aufgrund einer höheren Last) die Stromaufnahme relativ stark ausgeprägt ist, so dass deutliche Energieeinsparungen zu erzielen sind.

Wenn andererseits die Drehzahl erhöht wird, beispielsweise beim Anfahren des Elektromotors aus dem Stillstand, kann bei manchen Anwendungen (beispielsweise bei Motorsägen oder Heckenscheren) ein erfindungsgemäß bereitstellbares hohes Losbrechmoment gewünscht sein, so dass beim Erhöhen der Drehzahl nur eine relativ geringe Strombegrenzung durchgeführt wird.

Denn erfindungsgemäß ist vorgesehen, dass die durch die Strombegrenzung erzeugte Steuerkennlinie im Bereich der Strombegrenzung einen Losbrechabschnitt beinhaltet, in dem bei dem Anfahren des Elektromotors aus dem Stillstand ein sehr hoher Strom aufgenommen wird.

Wie oben erwähnt, kann ein solches, hierdurch erzeugtes Losbrechmoment für manche Anwendungen sehr vorteilhaft sein. Generell kann der Losbrechabschnitt relativ schmal ausgestaltet sein, so dass tatsächlich nur bei sehr niedrigen Drehzahlen ein hohes Losbrechmoment bereitgestellt wird, bei allen anderen Drehzahlen in dem Steuerkennlinienabschnitt jedoch eine wirkungsgradoptimale Strombegrenzung realisierbar ist.

Die Drehzahl des Elektromotors, in Abhängigkeit von welcher die Begrenzung der Stromaufnahme erfolgt, kann bspw. mittels eines Drehzahlsensors gemessen werden.

Bevorzugt ist es jedoch, wenn die Drehzahl aus den elektrischen Größen des Elektromotors wie der Spannung und/oder des von dem Elektromotor aufgenommenen elektrischen Stromes abgeleitet wird.

Bei dieser Ausführungsform ist ein separater Drehzahlsensor nicht erforderlich.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Arbeitsgerätes für den Landschafts-, Forst- und Gartenbau mit einer erfindungsgemäßen Antriebsanordnung;
- Fig. 2: ein Diagramm von Strom über Drehzahl mit Darstellung einer Kennlinie eines Elektromotors, einer Kennlinie eines Verbrennungsmotors und einer nicht erfindungsgemäßen Steuerkennlinie;
- Fig. 3: ein der Fig. 2 entsprechendes Diagramm mit Darstellung von unterschiedlichen nicht erfindungsgemäßen Steuerkennlinien;
- Fig. 4: ein weiteres Diagramm mit der Darstellung einer nicht erfindungsgemäßen Steuerkennlinie mit einem Hystereseabschnitt;
- Fig. 5: ein weiteres Diagramm mit der Darstellung einer erfindungsgemäßen Steuerkennlinie.

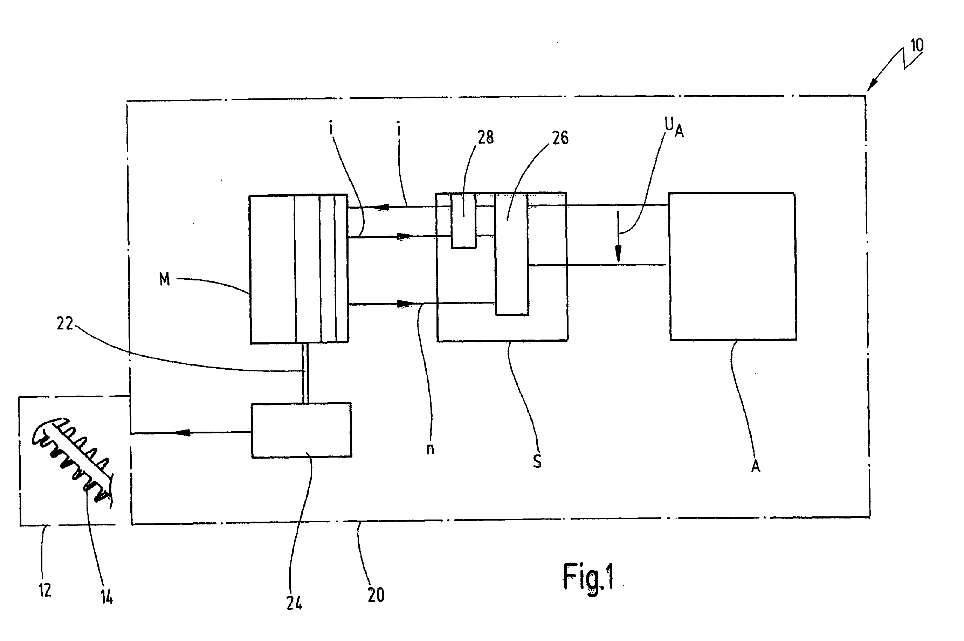

In Fig. 1 ist ein Arbeitsgerät für den Landschafts-, Forst- oder Gartenbau schematisch mit 10 bezeichnet.

Das Arbeitsgerät 10 weist ein Werkzeug 12 auf, das im vorliegenden Fall schematisch als Messer 14 einer Heckenschere angedeutet ist, sowie eine Antriebsanordnung, die generell mit 20 bezeichnet ist.

Das Arbeitsgerät kann, wie durch das Messer 14 angedeutet, eine Heckenschere sein. Andere Beispiele erfindungsgemäßer Arbeitsgeräte 10 sind Freischneider, Rasenkantenschneider, Kettensägen, Erdbohrgeräte, Blasgeräte, Saughäcksler, Motorsensen, Trennschleifer, Saugvorrichtungen (nass oder trocken), Sprüh- und Blasgeräte, Hochdruckreiniger, Rasenmäher, etc.

Das Arbeitsgerät 10 ist vorzugsweise als ein handgeführtes Arbeitsgerät ausgebildet, das von einer Bedienperson getragen oder geführt werden kann. Generell ist das Arbeitsgerät 10 für den professionellen Einsatz ausgelegt.

Die Antriebsanordnung 20 weist einen Elektromotor M, eine Steuervorrichtung S und einen elektrischen Energiespeicher in Form eines wiederaufladbaren und austauschbaren Akkumulatorpaketes A auf.

Der Energiespeicher A stellt eine Versorgungsspannung U_{A} bereit, und zwar für die Steuervorrichtung S. Die Steuervorrichtung S versorgt den Elektromotor M mit einem elektrischen Strom i. Der Elektromotor M weist eine Abtriebswelle 22 auf. Die Abtriebswelle 22 ist entweder direkt mit dem Werkzeug 12 gekoppelt oder aber über einen beliebigen Wandler, wie beispielsweise einen Rotations-Translationswandler, ein Untersetzungsgetriebe, und/oder Ähnliches. Ein derartiger Wandler ist in Fig. 1 schematisch bei 24 gezeigt.

Die Steuervorrichtung S weist zum einen eine an sich bekannte Leistungselektronik 28 zum Ansteuern des Elektromotors M auf. Die Leistungselektronik 28 kann auch separat von der Steuervorrichtung S ausgebildet sein. Ferner weist die Steuervorrichtung S Strombegrenzungsmittel 26 auf.

Die Strombegrenzungsmittel 26 dienen dazu, dem Elektromotor M eine Steuerkennlinie aufzuprägen, bei der im Bereich von niedrigen und gegebenenfalls mittleren Drehzahlen die Stromaufnahme des Elektromotors M generell begrenzt wird. Die Strombegrenzungsmittel 26 erhalten eingangsseitig die Ausgangsspannung U_{A}. Ferner werden die Strombegrenzungsmittel 26 mit einer Information über die Drehzahl n der Abtriebswelle 22 versorgt.

Die Strombegrenzungsmittel 26 können die Steuerkennlinie dem Elektromotor M auf beliebige Weise aufprägen. Vorzugsweise erfolgt dies durch eine Spannungsregelung, die als Führungsgröße beispielsweise die Drehzahl n beinhalten kann.

Alternativ ist es möglich, in der Steuervorrichtung S ein Kennfeld abzulegen, das für den jeweiligen Elektromotor M charakteristisch ist und feste Beziehungen zwischen Drehzahl, Strom und Spannung einrichtet.

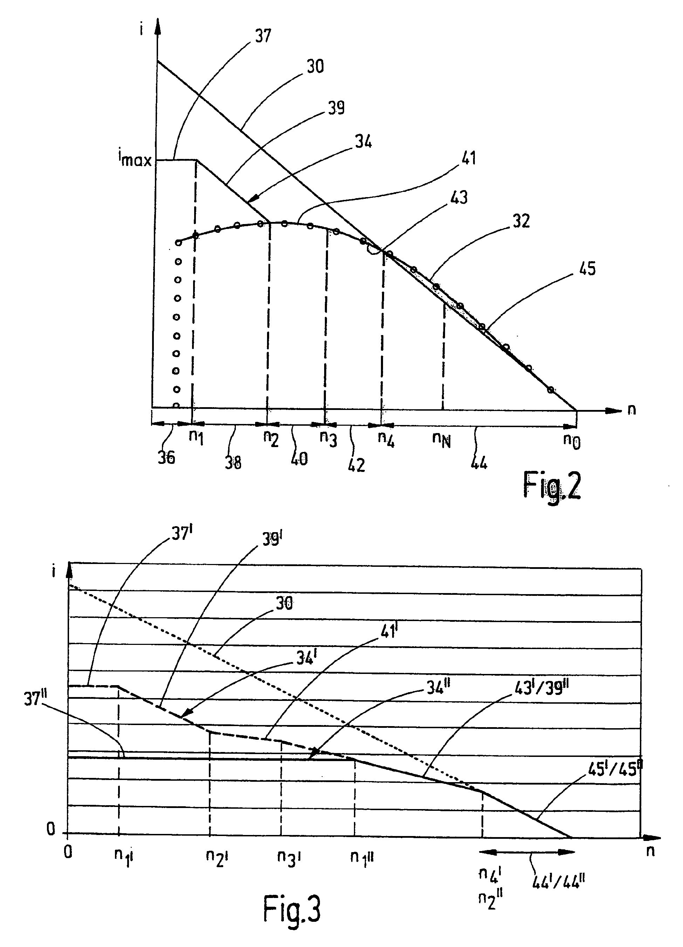

Fig. 2 zeigt ein Diagramm von Motorstrom über der Drehzahl n. In dem Diagramm der Fig. 2 ist zum einen eine charakteristische Motorkennlinie 30 des Elektromotors M aufgetrag. Die Motorkennlinie 30 ist eine übliche Kennlinie eines Elektromotors und verläuft im Wesentlichen linear von einem relativ hohen Strom bei niedrigen Drehzahlen bis hin zu einem geringen Strom bei hohen Drehzahlen.

In Fig. 2 ist ferner gepunktet die Kennlinie 32 eines Verbrennungsmotors dargestellt, wie er typischerweise in Arbeitsgeräten für den Landschafts-, Forst- oder Gartenbau verwendet wird. Ein Verbrennungsmotor kann erst ab einer gewissen Leerlaufdrehzahl ein Drehmoment abgeben, das im Bereich der Leerlaufdrehzahl zunächst relativ niedrig ist. Im Bereich mittlerer Drehzahlen steigt das Drehmoment dann etwas an und fällt mit hohen Drehzahlen wieder ab. Bei hohen Drehzahlen kann die Kennlinie 32 des Verbrennungsmotors im Wesentlichen der Kennlinie 30 des Elektromotors M entsprechen. Bei mittleren und niedrigen Drehzahlen sind die Charakteristika der Kennlinien 30, 32 jedoch vollkommen unterschiedlich. Bei einem Elektromotor steigt der Energiebedarf und folglich das zur Verfügung gestellte Drehmoment bei niedrigen Drehzahlen stark an. Bei einem Verbrennungsmotor fällt das bereitgestellte Drehmoment mit niedrigen Drehzahlen ab. In diesem Zusammenhang versteht sich, dass für die Kennlinie, 32 die y-Achse dem von dem Verbrennungsmotor abgegebenen Drehmoment entspricht, also beispielsweise proportional ist zur Drosselklappenstellung. Für einen typischen Elektromotor ist der Motorstrom ebenfalls proportional zum angegebenen Drehmoment.

Die Strombegrenzungsmittel 26 prägen dem Elektromotor M nun eine Steuerkennlinie auf, die in Fig. 2 mit 34 bezeichnet ist.

Die Steuerkennlinie 34 setzt sich aus einer Mehrzahl von Steuerkennlinienabschnitten zusammen. Dabei ist der von der Motorkennlinie 30 abgedeckte Drehzahlbereich in eine Mehrzahl von einzelnen Drehzahlbereichen unterteilt, nämlich einen ersten Drehzahlbereich 36, der niedrige Drehzahlen beinhaltet, einen zweiten Drehzahlbereich 38, der etwas höhere Drehzahlen beinhaltet, einen dritten Drehzahlbereich 40, der sich an den Drehzahlbereich 38 anschließt und mittlere Drehzahlen beinhaltet, einen vierten Drehzahlbereich 42, der sich an den Drehzahlbereich 40 anschließt und ebenfalls mittlere Drehzahlen beinhaltet, und einen fünften Drehzahlbereich 44, der sich an den vierten Drehzahlbereich 42 anschließt und höhere Drehzahlen bis hin zur Maximaldrehzahl beinhaltet.

In dem ersten Drehzahlbereich 36 weist die Steuerkennlinie 34 einen Steuerkennlinienabschnitt 37 auf, der linear ausgebildet ist, und zwar mit einer Steigung null. Der Steuerkennlinienabschnitt 37 stellt den maximalen Motorstrom iₘₐₓ dar, der z.B. wenigstens 15%, 20% oder 30% unterhalb des Stromes liegt, der in diesen Drehzahlbereich 36 mit der normalen Kennlinie 30 realisiert werden würde.

In dem zweiten Drehzahlbereich 38 weist die Steuerkennlinie 34 einen zweiten Steuerkennlinienabschnitt 38 auf, der linear ausgebildet ist, mit einer Steigung entsprechend etwa der Steigung der Motorkennlinie 30. In dem dritten Drehzahlbereich 40 weist die Steuerkennlinie 34 einen dritten Steuerkennlinienabschnitt 41 auf, der wiederum linear ausgebildet ist, mit einer Steigung, die deutlich niedriger ist als die Steigung der Motorkennlinie 30. In dem vierten Drehzahlbereich 42 weist die Steuerkennlinie 34 einen Steuerkennlinienabschnitt 43 auf, der wiederum linear ausgebildet ist. Der vierte Steuerkennlinienabschnitt 43 weist eine Steigung auf, die zwischen der Steigung des Steuerkennlinienabschnittes 41 und jener des Steuerkennlinienabschnittes 39 liegt.

Es versteht sich im vorliegenden Zusammenhang, dass bei dem Vergleich der Steigungen generell der Betrag der jeweiligen Steigungen gemeint ist.

In dem fünften Drehzahlbereich 44 weist die Steuerkennlinie 34 einen Steuerkennlinienabschnitt 45 auf, der identisch ist mit dem entsprechenden Abschnitt der Motorkennlinie 30.

Mit anderen Worten wird der Motorstrom i mittels der aufgeprägten Steuerkennlinie 34 in dem fünften Drehzahlbereich 44 gar nicht begrenzt. In dem vierten Drehzahlbereich 42 wird der Motorstrom i relativ gesehen etwas begrenzt. In dem dritten Drehzahlbereich 40 wird der Motorstrom i relativ gesehen stärker begrenzt. In dem zweiten Drehzahlbereich 38 erfolgt, relativ gesehen, wiederum eine etwas geringere Strombegrenzung. In dem ersten Drehzahlbereich 36 wird der Motorstrom i konstant auf einen festen Wert iₘₐₓ begrenzt, also relativ gesehen sehr stark.

Durch die Steuerkennlinie 34 wird der Motorstrom i demzufolge "aktiv" begrenzt, um insbesondere bei niedrigen Drehzahlen den Stromverbrauch zu verringern. Fernern kann dem Benutzer ein "Feedback" vermittelt werden, wenn er das Arbeitsgerät "überdrückt".

Zudem ist der Wirkungsgrad eines Elektromotors M im Bereich niedriger Drehzahlen generell etwas geringer. Demzufolge kann durch die erfindungsgemäße Steuerkennlinie 34 der Stromverbrauch verringert werden, der Wirkungsgrad des Arbeitsgerätes 10 insgesamt erhöht werden. Ferner kann insbesondere die Einsatzdauer des Energiespeichers A verlängert werden.

All dies erfolgt durch eine elektronische Begrenzung des Motorstromes auf eine geeignete Momentenkennung, die beispielsweise von der typischen Anwendung des Arbeitsgerätes abhängen kann. Die Steuerkennlinie 34 der Fig. 2 ist daher lediglich beispielhaft zu verstehen.

In Fig. 3 sind wiederum neben einer Motorkennlinie 30 zwei alternative Steuerkennlinien 34' bzw. 34" dargestellt.

Die Steuerkennlinie 34' ist in fünf Steuerkennlinienabschnitte 37', 39', 41', 43', 45' unterteilt - qualitativ im Wesentlichen vergleichbar mit der Steuerkennlinie 34 der Fig. 2.

Die Steuerkennlinie 34" ist über den verfügbaren Drehzahlbereich in nur drei Drehzahlbereiche unterteilt, mit einem ersten Steuerkennlinienabschnitt 37", in dem der Motorstrom i auf einen festen Wert begrenzt wird, mit einem letzten Steuerkennlinienabschnitt 45", in dem die Steuerkennlinie 34" der Motorkennlinie 30 entspricht, und in einen mittleren Steuerkennlinienabschnitt 39", der eine etwas geringere Steigung als die Motorkennlinie 30 aufweist.

Generell gilt für die Steuerkennlinien 34, 34', 34" Folgendes. In einem mittleren Drehzahlbereich wird die Steuerkennlinie 34 vorzugsweise der Charakteristik des Verbrennungsmotors 32 angenähert. In einem Bereich niedriger Drehzahlen wird zwar noch von dem generellen Vorteil des Elektromotors M Gebrauch gezogen, dahingehend, dass dieser im Bereich niedriger Drehzahlen generell relativ hohe Drehmomente zur Verfügung stellen kann. Allerdings wird in diesem Bereich bereits eine relativ starke Strombegrenzung durchgeführt. Hierdurch ist die Einsatzzeit des Energiespeichers A, also die Zeit bis dieser entladen ist und neu aufgeladen werden muss, relativ gesehen verlängert.

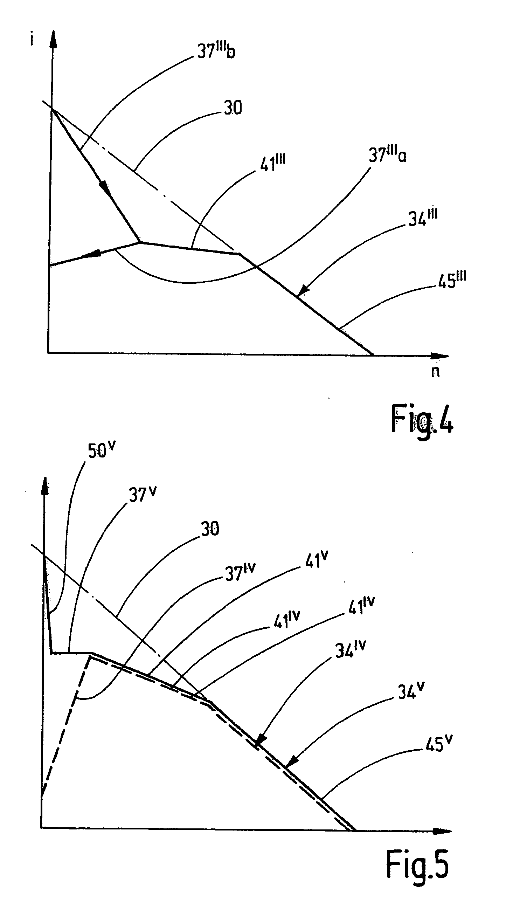

In den Fig. 4 und 5 sind weitere alternative Ausführungsformen von erfindungsgemäßen Steuerkennlinien dargestellt. Für diese gilt generell das oben zu den bereits beschriebenen Steuerkennlinien Gesagte. Im Folgenden wird jedoch auf Besonderheiten der nachfolgend erläuterten Steuerkennlinien eingegangen.

In Fig. 4 ist eine Steuerkennlinie 34"' dargestellt, die einen Steuerkennlinienabschnitt 45'" und einen ersten Strom begrenzenden Steuerkennlinienabschnitt 41'" aufweist. Ferner ist ein zweiter Strom begrenzender Steuerkennlinienabschnitt als Hystereseabschnitt 37a"', 37b'" ausgebildet. Der Hystereseabschnitt ist so ausgestaltet, dass beim Erhöhen der Drehzahl ein relativ hoher Strom 37b'" aufgenommen wird. Beim Verringern der Drehzahl wird ein relativ gesehen niedrigerer Strom 37a"' aufgenommen.

Es versteht sich, dass ein solcher Hystereseabschnitt vorzugsweise, jedoch nicht notwendigerweise an Drehzahlgrenzen mit der Drehzahl Null angrenzt. Ferner ist es vorteilhaft, jedoch nicht unbedingt notwendig, dass dann, wenn beim Anfahren ein relativ hohes Drehmoment bereitgestellt wird, der maximale Strom bei der Drehzahl Null dem maximal von dem Elektromotor M abgegebenen Strom entspricht.

Generell kann der Hystereseabschnitt auch so ausgebildet sein, dass beim Anfahren generell die normale Kennlinie 30 des Elektromotors "benutzt" wird, und eine Strombegrenzung lediglich in der umgekehrten Richtung beim Verringern der Drehzahl erfolgt.

In Fig. 5 sind zwei weitere erfindungsgemäße Steuerkennlinien 34^{IV}, 34^{V} dargestellt.

Die Steuerkennlinie 34^{IV} weist einen ersten, "normalen" Steuerkennlinienabschnitt 41^{IV} sowie einen zweiten Steuerkennlinienabschnitt 37^{IV} auf, in dem die Steigung der Steuerkennlinie 34^{IV} negativ ist.

Die Steuerkennlinie 34^{IV} entspricht daher in ihrer Form generell der Form der Kennlinie eines Verbrennungsmotors, wie sie in Fig. 2 bei 32 gezeigt ist.

Die Steuerkennlinie 34^{v} weist in dem an die Drehzahl Null angrenzenden Bereich 50^{V} eine hohe Steigung auf, so dass sich bei dem Anfahren des Elektromotors ein relativ hohes Antriebsmoment einstellen kann, das als Losbrechmoment genutzt werden kann.

In der obigen Darstellung versteht sich, dass dann, wenn von einer Steigung einer Kennlinie oder eines Kennlinienabschnittes gesprochen wird, generell der Betrag der Steigung gemeint ist.

## Patentansprüche

1. Antriebsanordnung (20) für ein handgeführtes Arbeitsgerät (10) für den Landschafts-, Forst- und Gartenbau, mit einem Elektromotor (M), einem Speicher (A) für elektrische Energie, und einer Steuervorrichtung (S) für den aus dem Energiespeicher (A) gespeisten Elektromotor (M), wobei der Elektromotor (M) eine bestimmte, insbesondere lineare Kennlinie (30) zwischen dem von dem Elektromotor (M) aufgenommenen elektrischen Strom (i) und der Drehzahl (n) einer Abtriebswelle (22) des Elektromotors (M) besitzt, wobei die Steuervorrichtung (S) vorzugsweise Strombegrenzungsmittel (26) aufweist, die den durch den Elektromotor (M) fließenden Strom (i) auf einen Maximalwert begrenzen, um den Elektromotor (M) vor einer Überlastung zu schützen,
**dadurch gekennzeichnet, dass** die Strombegrenzungsmittel (26) dem Elektromotor (M) eine Steuerkennlinie (34^{v}) aufprägen, welche die Stromaufnahme des Elektromotors (M) in Abhängigkeit von der Drehzahl (n) begrenzt, wobei die Steuerkennlinie (34^{v}) im Bereich sehr niedriger Drehzahlen einen Losblechabschnitt (50^{V}) beinhaltet, welcher vorzugsweise relativ schmal ausgestaltet ist, und welcher beim Anfahren des Elektromotors (M) aus dem Stillstand eine relativ geringe Strombegrenzung bewirkt, wobei bei anderen Drehzahlen in dem Steuerkennlinienabschnitt für niedrige Drehzahlen (37^{V}) eine wirkungsgradoptimale Strombegrenzung erfolgt.

2. Antriebsanordnung nach Anspruch 1, **dadurch gekennzeichnet, dass** die Begrenzung der Stromaufnahme unabhängig von der Temperatur des Elektro-motors (M) erfolgt.

3. Antriebsanordnung nach Anspruch 1 oder 2, **dadurch gekennzeichnet, dass** die Steuervorrichtung (S) den von der Kennlinie (30) des Elektromotors (M) vorgegebenen Drehzahlbereich in eine Mehrzahl von wenigstens drei Drehzahlbereichen unterteilt, wobei zumindest in einem mittleren Drehzahlbereich ein Steuerkennlinienabschnitt (41^{v}) mit einer geringeren Steigung als die Kennlinie (30) des Elektromotors (M) eingerichtet ist.

4. Antriebsanordnung nach Anspruch 3, **dadurch gekennzeichnet, dass** in einem unteren Drehzahlbereich ein Steuerkennlinienabschnitt (37^{V}) mit einer Steigung eingerichtet ist, die kleiner ist als die Steigung des Steuerkennlinienabschnittes (41^{V}) in dem mittleren Drehzahlbereich.

5. Antriebsanordnung nach Anspruch 4, **dadurch gekennzeichnet, dass** die Steigung des Steuerkennlinienabschnittes (37^{V}) in dem unteren Drehzahlbereich Null ist.

6. Antriebsanordnung nach einem der Ansprüche 1 - 5, **dadurch gekennzeichnet, dass** in einem oberen Drehzahlbereich (45^{V}) im Wesentlichen keine Begrenzung der Stromaufnahme erfolgt.

7. Antriebsanordnung nach einem der Ansprüche 1 - 6, **dadurch gekennzeichnet, dass** die Steuervorrichtung (S) die Stromaufnahme des Elektromotors (M) in dem Bereich niedriger Drehzahlen, ausgenommen der Losbrechabschnitt (50^{V}), generell auf Werte begrenzt, die wenigstens 20 % kleiner sind als die Kennlinienwerte, die sich für diese Drehzahlen aus der Kennlinie (30) des Elektromotors (M) ergeben.

8. Verfahren zum Steuern eines Elektromotors (M), der aus einem Speicher (A) für elektrische Energie gespeist wird, und zwar für eine Antriebsanordnung (20) eines portablen Arbeitsgerätes (10) für den Landschafts-, Forst- und Gartenbau, wobei der Elektromotor (M) eine bestimmte, insbesondere lineare Kennlinie (30) zwischen dem von dem Elektromotor (M) aufgenommenen elektrischen Strom (i) und der Drehzahl (n) einer Abtriebswelle (22) des Elektromotors (M) besitzt, wobei der durch den Elektromotor (M) fließende Strom (i) mittels Strombegrenzungsmitteln (26) auf einen Maximalwert begrenzt wird, um den Elektromotor (M) vor einer Überlastung zu schützen,
**dadurch gekennzeichnet, dass** die Strombegrenzungsmittel (26) dem Elektromotor (M) eine Steuerkennlinie (34^{V}) aufprägen, welche die Stromaufnahme des Elektromotors (M) in Abhängigkeit von der Drehzahl (n) begrenzt, wobei die Steuerkennlinie (34^{V}) im Bereich sehr niedriger Drehzahlen einen Losbrechabschnitt (50^{V}) beinhaltet, welcher vorzugsweise relativ schmal ausgestaltet ist, und welcher beim Anfahren des Elektromotors (M) aus dem Stillstand eine relativ geringe Strombegrenzung bewirkt, wobei bei anderen Drehzahlen in dem Steuerkennlinienabschnitt für niedrige Drehzahlen (37^{V}) eine wirkungsgradoptimale Strombegrenzung erfolgt.

9. Verfahren nach Anspruch 8, wobei der maximale Strom bei der Drehzahl Null dem maximal von dem Elektromotor aufgenommenen Strom entspricht.

10. Verfahren nach Anspruch 8 oder 9, wobei der bei dem Anfahren des Elektromotors (M) aus dem Stillstand verwendete Losbrechabschnitt (50^{V}) relativ schmal ausgebildet ist, so dass nur bei sehr niedrigen Drehzahlen ein hohes Losbrechmoment bereitgestellt wird, bei allen anderen Drehzahlen in dem Steuerkennlinienabschnitt jedoch eine wirkungsgradoptimale Strombegrenzung realisierbar ist.

11. Verfahren nach einem der Ansprüche 8 - 10, wobei die durch die Strombegrenzung erzeugte Steuerkennlinie (34"') im Bereich der Strombegrenzung einen Hystereseabschnitt (37'") beinhaltet.

12. Verfahren nach Anspruch 11, wobei der Hystereseabschnitt (37"') so ausgestaltet ist, dass beim Erhöhen der Drehzahl ein relativ hoher Strom (37b"') aufgenommen wird und dass beim Verringern der Drehzahl ein relativ niedrigerer Strom (37a"') aufgenommen wird.

13. Verfahren nach Anspruch 12, wobei die durch die Strombegrenzung erzeugte Steuerkennlinie im Bereich des Hystereseabschnittes beim Verringern der Drehzahl eine positive Steigung aufweist.

14. Verfahren nach einem der Ansprüche 8 - 13, wobei die Drehzahl aus den elektrischen Größen des Elektromotors abgeleitet wird.

15. Handgeführtes Arbeitsgerät (10) für den Landschafts-, Forst- und Gartenbau, mit einer Antriebsanordnung (20) nach einem der Ansprüche 1 - 7.

## Claims

1. Drive arrangement (20) for a hand-guided working machine (10) for agriculture, forestry and horticulture applications, comprising an electric motor (M), a storage means (A) for electrical energy, and a control apparatus (S) for the electric motor (M) which is fed from the energy storage means (A), with the electric motor (M) having a specific, in particular linear, characteristic curve (30) between the electric current (i) which is consumed by the electric motor (M) and the rotational speed (n) of an output shaft (22) of the electric motor (M), wherein the control apparatus (S) comprises preferably current-limiting means (26) which limit the current (i) which flows through the electric motor (M) to a maximum value in order to protect the electric motor (M) against overloading,
**characterized in that** the control-limiting means (26) impose on the electric motor (M) a control characteristic curve (34^{V}) which limits the current consumption of the electric motor (M) in dependence on the rotational speed (n), wherein the control characteristic curve (34^{V}) comprises in a region of very low rotational speeds a breakaway section (50^{V}), which is preferably formed relatively narrow and which effects at starting of the electric motor (M) from a standstill a relatively low current limitation, whereas at other rotational speeds in the control characteristic curve section for low rotational speeds (37^{V}) current is limited so as to optimize efficiency.

2. Drive arrangement according to claim 1, **characterized in that** the current consumption is limited independently of the temperature of the electric motor (M).

3. Drive arrangement according to claim 1 or 2, **characterized in that** the control apparatus (S) divides the rotational speed range which is prespecified by the characteristic curve (30) of the electric motor (M) into a plurality of at least three rotational speed ranges, with a control characteristic curve section (41^{V}) with a shallower gradient than the characteristic curve (30) of the electric motor (M) being established at least in a medium rotational speed range.

4. Drive arrangement according to claim 3, **characterized in that** a control characteristic curve section (37^{V}) with a gradient which is shallower than the gradient of the control characteristic curve section (41^{V}) in the medium rotational speed range is established in a lower rotational speed range.

5. Drive arrangement according to claim 4, **characterized in that** the gradient of the control characteristic curve section (37^{V}) in the lower rotational speed range is zero.

6. Drive arrangement according to one of claims 1 - 5, **characterized in that** essentially no limitation of the current consumption is made in an upper rotational speed range (44^{V}).

7. Drive arrangement according to one of claims 1 - 6, wherein the control apparatus (S) limits the current consumption of the electric motor (M) in the range of lower rotational speeds except for the breakaway section (50^{V}) generally to values which are at least 20% smaller than the characteristic curve values which are given for these rotational speeds by the characteristic curve (30) of the electric motor (M).

8. Method for controlling an electric motor (M) which is fed from a storage means (A) for electrical energy, specifically for a drive arrangement (20) of a portable working machine (10) for agriculture, forestry and horticulture applications, with the electric motor (M) having a specific, particularly linear, characteristic curve (30) between the electric current (i) which is consumed by the electric motor (M) and the rotational speed (n) of an output shaft (22) of the electric motor (M), with the current (i) which flows through the electric motor (M) being limited by current-limiting means (26) to a maximum value in order to protect the electric motor (M) against overloading,
**characterized in that** the control-limiting means (26) impose on the electric motor (M) a control characteristic curve (34^{V}) which limits the current consumption of the electric motor (M) in dependence on the rotational speed (n), wherein the control characteristic curve (34^{V}) comprises in a region of very low rotational speeds a breakaway section (50^{V}), which is preferably formed relatively narrow and which effects at starting of the electric motor (M) from a standstill a relatively low current limitation, whereas at other rotational speeds in the control characteristic curve section for low rotational speeds (37^{V}) current is limited so as to optimize efficiency.

9. Method according to claim 8, with the maximum current at rotational speed of zero corresponds to the current that is maximally consumed by the electric motor.

10. Method according to claim 8 or 9, wherein the breakaway section (50^{V}) which is used when starting the electric motor (M) from a standstill, is relatively narrow so that a high breakaway torque is provided only at very low rotational speeds, at all other rotational speeds in the control characteristic curve section however a current limitation can be realized that is optimized with respect to efficiency.

11. Method according to one of claims 8 to 10, wherein the control characteristic curve (34"') which is generated by the current limitation, contains a hysteresis section (37"') in the region in which current is limited.

12. Method according to claim 11, wherein the hysteresis section (37'") is designed such that a relatively high current (37b"') is consumed when the rotational speed is increased, and such that a relatively lower current (37a"') is consumed when the rotational speed is reduced.

13. Method according to claim 12, wherein the characteristic curve which is generated by the current limitation in the region of the hysteresis section comprises a positive gradient when the rotational speed is reduced.

14. Method according to one of claims 8 - 3, wherein the rotational speed is derived from the electrical variables of the electric motor.

15. Hand-guided working machine (10) for agriculture, forestry and horticulture applications, comprising a drive arrangement (20) according to any of claims 1 to 7.

## Revendications

1. Arrangement d'entraînement (20) pour un outillage (10) guidé manuellement pour les travaux paysagers, forestiers et de jardinage, comprenant un moteur électrique (M), un accumulateur (A) pour de l'énergie électrique et un dispositif de commande (S) pour le moteur électrique (M) alimenté depuis l'accumulateur d'énergie (A), le moteur électrique (M) possédant une courbe caractéristique (30) donnée, notamment linéaire, entre le courant électrique (i) absorbé par le moteur électrique (M) et la vitesse de rotation (n) d'un arbre de sortie (22) du moteur électrique (M), le dispositif de commande (S) possédant de préférence des moyens de limitation du courant (26) qui limitent le courant (i) circulant à travers le moteur électrique (M) à une valeur maximale afin de protéger le moteur électrique (M) contre une surcharge,
**caractérisé en ce que** les moyens de limitation du courant (26) appliquent au moteur électrique (M) une courbe caractéristique de commande (34') qui limite la consommation de courant du moteur électrique (M) en fonction de la vitesse de rotation (n), la courbe caractéristique de commande (34^{V}) présentant dans la plage des très basses vitesses de rotation une portion de décollement (50') qui est configurée de préférence de manière relativement étroite et qui, lors du démarrage du moteur électrique (M) à partir de l'arrêt, cause une relativement faible limitation du courant, une limitation de courant optimale en termes de rendement étant obtenue à d'autres vitesses de rotation dans la portion de courbe caractéristique de commande pour de basses vitesses de rotation (37^{V}).

2. Arrangement d'entraînement selon la revendication 1, **caractérisé en ce que** la limitation de la consommation de courant est réalisée indépendamment de la température du moteur électrique (M).

3. Arrangement d'entraînement selon la revendication 1 ou 2, **caractérisé en ce que** le dispositif de commande (S) divise la plage de vitesses de rotation prédéfinie par la courbe caractéristique (30) du moteur électrique (M) en une pluralité d'au moins trois plages de vitesses de rotation, une portion de courbe caractéristique de commande (41^{V}) étant établie avec une pente inférieure à celle de la courbe caractéristique (30) du moteur électrique (M) au moins dans une plage de vitesses de rotation centrale.

4. Arrangement d'entraînement selon la revendication 3, **caractérisé en ce que** dans une plage de vitesses de rotation basse est établie une portion de courbe caractéristique de commande (37^{V}) ayant une pente qui est inférieure à la pente de la portion de courbe caractéristique de commande (41^{V}) dans la plage de vitesses de rotation centrale.

5. Arrangement d'entraînement selon la revendication 4, **caractérisé en ce que** la pente de la portion de courbe caractéristique de commande (37^{V}) dans la plage de vitesses de rotation basse est nulle.

6. Arrangement d'entraînement selon l'une des revendications 1 à 5, **caractérisé en ce que** dans une plage de vitesses de rotation haute (45^{V}), il n'existe sensiblement aucune limitation de la consommation de courant.

7. Arrangement d'entraînement selon l'une des revendications 1 à 6, **caractérisé en ce que** le dispositif de commande (S) limite généralement la consommation de courant du moteur électrique (M) dans la plage des basses vitesses de rotation, à l'exception de la portion de décollement (50^{V}), à des valeurs qui sont au moins 20 % inférieures aux valeurs de la courbe caractéristique résultant pour ces vitesses de rotation de la courbe caractéristique (30) du moteur électrique (M).

8. Procédé pour commander un moteur électrique (M) qui est alimenté depuis un accumulateur (A) pour de l'énergie électrique, et ce pour un arrangement d'entraînement (20) pour un outillage (10) guidé manuellement pour les travaux paysagers, forestiers et de jardinage, le moteur électrique (M) possédant une courbe caractéristique (30) donnée, notamment linéaire, entre le courant électrique (i) absorbé par le moteur électrique (M) et la vitesse de rotation (n) d'un arbre de sortie (22) du moteur électrique (M), le courant (i) circulant à travers le moteur électrique (M) étant limité à une valeur maximale par des moyens de limitation du courant (26) afin de protéger le moteur électrique (M) contre une surcharge,
**caractérisé en ce que** les moyens de limitation du courant (26) appliquent au moteur électrique (M) une courbe caractéristique de commande (34^{V}) qui limite la consommation de courant du moteur électrique (M) en fonction de la vitesse de rotation (n), la courbe caractéristique de commande (34^{V}) présentant dans la plage des très basses vitesses de rotation une portion de décollement (50^{V}) qui est configurée de préférence de manière relativement étroite et qui, lors du démarrage du moteur électrique (M) à partir de l'arrêt, cause une relativement faible limitation du courant, une limitation de courant optimale en termes de rendement étant obtenue à d'autres vitesses de rotation dans la portion de courbe caractéristique de commande pour de basses vitesses de rotation (37^{V}).

9. Procédé selon la revendication 8, dans lequel le courant maximum en cas de vitesse de rotation nulle correspond au courant maximum absorbé par le moteur électrique.

10. Procédé selon la revendication 8 ou 9, dans lequel la portion de décollement (50^{V}) utilisée lors du démarrage du moteur électrique (M) à partir de l'arrêt est réalisée de manière relativement étroite, de sorte qu'un couple de décollement élevé soit fourni seulement dans le cas de très faibles vitesses de rotation, une limitation de courant optimale en termes de rendement pouvant toutefois être obtenue à toutes les autres vitesses de rotation dans la portion de courbe caractéristique de commande.

11. Procédé selon l'une des revendications 8 à 10, selon lequel la courbe caractéristique de commande (34"') générée par la limitation du courant contient dans la plage de limitation du courant une portion d'hystérésis (37'").

12. Procédé selon la revendication 11, selon lequel la portion d'hystérésis (37"') est configurée de telle sorte qu'en cas d'augmentation de la vitesse de rotation, un courant relativement élevé (37b") soit absorbé et qu'en cas de diminution de la vitesse de rotation, un courant relativement plus faible (37a"') soit absorbé.

13. Procédé selon la revendication 12, selon lequel la courbe caractéristique de commande générée par la limitation du courant présente une pente positive dans la plage de la portion d'hystérésis en cas de diminution de la vitesse de rotation.

14. Procédé selon l'une des revendications 8 à 13, selon lequel la vitesse de rotation est dérivée des grandeurs électriques du moteur électrique.

15. Outillage (10) guidé manuellement pour les travaux paysagers, forestiers et de jardinage, équipé d'un arrangement d'entraînement (20) selon l'une des revendications 1 à 7.
